# EUROPÄISCHE PATENTSCHRIFT

(11) **EP 0 378 806 B1**
(45) Veröffentlichungstag und Bekanntmachung des Hinweises auf die Patenterteilung: **09.06.1993**
(21) Anmeldenummer: 89122949.4
(22) Anmeldetag: 12.12.1989
(51) Int. Cl.: B05C 17/005

(54) **Vorrichtung zum Mischen und Ausbringen pastöser Massen**
Device for mixing and dispensing pasty products
Dispositif de mélange et de distribution de produits pâteux

(30) Priorität: 17.01.1989 DE 8900469 U
(43) Veröffentlichungstag der Anmeldung: 25.07.1990
(73) Patentinhaber: THERA Patent GmbH & Co. KG Gesellschaft für industrielle Schutzrechte, D-82229 Seefeld (DE)
(72) Erfinder: Herold, Wolf-Dietrich, Dr.-Ing., D-8031 Seefeld 2 (DE); Brandhorst, Gerd, Dipl.-Ing., D-8000 München 71 (DE); Rehfeld, Günter, D-8918 Diessen (DE)
(74) Vertreter: Strehl Schübel-Hopf Groening & Partner

(56) Entgegenhaltungen:
- EP-A- 0 121 342
- FR-A- 2 501 080

## Beschreibung

Die Erfindung betrifft eine Vorrichtung zum Mischen und Ausbringen pastöser Massen. Eine Vorrichtung gemäß dem Oberbegriff des Anspruchs 1 ist aus der US-A-4 014 463 bekannt. Die beiden zur Bildung der Paste miteinander zu vermischenden Komponenten sind dort in zwei axial hintereinander angeordneten Kammern eines Behälters angeordnet, wobei die hintere Kammer gegenüber der vorderen kolbenartig verschiebbar ist. Die in der hinteren Kammer enthaltene Komponente fließt dabei durch ein die vordere Kammer axial durchsetzendes Rohr und tritt an dessen vorderem Ende aus, während das in der vorderen Kammer enthaltene Material in dem zwischen dem Rohr und der Außenwand der Behälteröffnung gebildeten ringförmigen Bereich austritt. Der auf diese Weise von den beiden Komponenten gebildete konzentrische Strang wird durch einen in die Behälteröffnung einsteckbaren statischen Mischer gepreßt, in dem die beiden Komponenten zu einer homogenen Paste miteinander vermischt werden, die am vorderen Ausbringende des Mischers austritt. Der statische Mischer ist in üblicher Weise aus mehreren in Ausbringrichtung mit abwechselnden Drehrichtungen hintereinander angeordneten Flügelelementen zusammengesetzt, wobei die Eintrittskante eines Flügelelements jeweils senkrecht zur Austrittskante des vorhergehenden Flügelelements steht.

Derartige Vorrichtungen mit statischen Mischern werden insbesondere dort eingesetzt, wo es darauf ankommt, zwei Komponenten gründlich miteinander zu vermischen, um eine Paste mit homogenen Eigenschaften, etwa ein dentales Abdruckmaterial oder einen Zweikomponentenklebstoff, zu erzielen.

Bei der bekannten Vorrichtung ist im Ringbereich der Behälteröffnung eine flexible Dichtscheibe angeordnet, die durch den Ausbringdruck der betreffenden Komponente geöffnet werden, bei Nachlassen des Drucks dagegen schließen soll. Dadurch soll ein unbeabsichtigtes Vermischen der beiden Komponenten verhindert werden, wenn der Ausbringvorgang unterbrochen wird. Eine Vermischung findet lediglich im Bereich außerhalb der Dichtscheibe sowie im statischen Mischer statt. Vor erneuter Benutzung der Vorrichtung wird der Mischer aus der Behälteröffnung herausgezogen und samt der darin erhärteten Paste weggeworfen, und der Bereich der Behälteröffnung oberhalb der Dichtscheibe wird von verbliebenen Resten der teilweise vermischten und gehärteten Paste gereinigt. Zur Befestigung des Mischers dient eine sein Gehäuse umgebende und auf das vordere Behälterende aufzuschraubende Überwurfmutter.

Bei der bekannten Vorrichtung ist die beschriebene Dichtscheibe insofern problematisch, als sie einerseits außerordentlich nachgiebig sein müßte, um eine ausreichende Vergrößerung ihrer das Rohr umgebenden mittleren Öffnung zu gestatten, andererseits aber ausreichende Rückstellkräfte haben sollte, um die Öffnung bei fehlendem Ausbringdruck abzudichten. In der Praxis wird eine solche Dichtscheibe auf jeden Fall zu einer unerwünschten Erhöhung des erforderlichen Ausbringdruckes führen.

Ein weiterer Nachteil der bekannten Vorrichtung besteht darin, daß der Öffnungsbereich des Behälters nach Abziehen eines vorher verwendeten Mischers vor erneuter Inbetriebnahme manuell von den Resten der ausgehärteten Masse gereinigt werden muß. Diese Reinigung ist in dem verhältnismäßig engen Mündungsbereich des inneren Ausbringrohres besonders schwierig und kaum vollständig durchzuführen. Eine durch nicht entfernte Reste verursachte Querschnittsverringerung führt aber beim anschließenden Gebrauch nicht nur zu einer Änderung des Mischungsverhältnisses und damit zu einer Verschlechterung der Eigenschaften der fertigen Paste, sondern auch zu einer Druckerhöhung, die bei bestimmten Pasten bis zu einer die gesamte Vorrichtung unbrauchbar machenden Verstopfung gehen kann.

Schließlich erfordert die bekannte Vorrichtung einen speziell gestalteten Behälter, der einen erheblichen Aufwand bei der Fertigung sowie bei der Befüllung und Montage erfordert. Übliche Füllvorrichtungen lassen sich zum Befüllen der bekannten Vorrichtung nicht ohne weiteres einsetzen.

Der Erfindung liegt die Aufgabe zugrunde, eine Vorrichtung zum Mischen und Ausbringen pastöser Massen anzugeben, die bei möglichst einfacher Handhabung eine gründliche Durchmischung der Komponenten gewährleistet und eine Verstopfung im unbenutzten Zustand durch unbeabsichtigte Verschleppung der Komponenten verhindert.

Die Lösung dieser Aufgabe ist in Anspruch 1 angegeben. Das danach vorgesehene hülsenartige Trennelement, das dann, wenn der Mischer mit der mit den Komponenten-Zuführungen verbundenen Öffnung verbunden wird, an die die Öffnung unterteilende Trennwand dicht anschließt und sie fortsetzt, bewirkt, daß die beiden Komponenten erst an der Eintrittsstelle des Mischers miteinander in Berührung kommen, und dieser Bereich beim Abnehmen des Mischers von dem die Öffnung aufweisenden Bauteil mitsamt dem Trennelement entfernt wird. Mit anderen Worten sorgt das Trennelement dafür, daß die Vermischungsstelle und diejenige Stelle, an der die Komponentenstränge beim Lösen des Mischers unterbrochen werden, voneinander entfernt sind.

Die Weiterbildung der Erfindung nach Anspruch 2 ist insofern von Vorteil, als die Stellen, an denen die Komponentenstränge unterbrochen werden, gegenüber dem vorderen Ende der die Öffnung unterteilenden Trennwand nach hinten in das die Komponenten-Zuführungen aufweisende Bauteil hinein verlagert werden, so daß ein noch weiterer Abstand von der Mischstelle erreicht und ein Verschleppen im Bereich der Öffnung noch vollständiger unterbunden wird. Dabei wird beim Aufschieben der in dem Trennelement ausgebildeten Ringnut auf die in der Behälteröffnung vorgesehene Trennwand gleichzeitig eine Reinigung etwa verbliebener Reste bewirkt.

In der Ausgestaltung der Erfindung nach Anspruch 3 erfolgt die Verbindung zwischen dem Mischer und dem besagten Bauteil durch unmittelbares Verschrauben, so daß sich die beim Stand der Technik erforderliche zusätzliche Mutter erübrigt. Außerdem ergibt eine derartige unmittelbare Verschraubung eine sichere und dichte Verbindung, wie sie angesichts der bei hochviskosen Massen erforderlichen hohen Ausbringdrücke wünschenswert ist. Ferner wird beim Auseinanderschrauben von Bauteil und Mischer nicht nur eine Abreiß- sondern auch eine Abscherwirkung auf die beiden Komponentenstränge ausgeübt. Aus Kostengründen ist es dabei von Vorteil, gemäß Anspruch 4 das in der Herstellung billigere Außengewinde an dem nach jedem Gebrauch wegzuwerfenden Mischer vorzusehen.

Die Maßnahme des Anspruchs 5 ist insofern zweckmäßig, als auch im Ringbereich der in dem Bauteil vorgesehenen Öffnung eine gut definierte Abscherfläche erzeugt wird.

Mit der Gestaltung nach Anspruch 6 läßt sich erreichnen, daß die beiden Komponentenstränge derart unterbrochen werden, daß sie bei erneuter Benutzung der Vorrichtung nach Einsetzen eines neuen Mischers gleichzeitig am Eingangsende des Mischers eintreffen, so daß sofort das richtige Mischungsverhältnis erzielt wird.

Die Weiterbildung der Erfindung nach Anspruch 7 stellt eine einfachere Möglichkeit dar, die Abreißstelle des den Ringbereich der Öffnung durchsetzenden Komponentenstrangs an einer gegenüber der Vorderfläche der Öffnung zurückverlegten Stelle zu definieren.

Bei der Ausgestaltung der Erfindung nach Anspruch 8 sind die Behälterkammern in der für herkömmliche Befüllungsmaschinen üblichen Weise nebeneinander angeordnet. Durch die angegebene Stellung des ersten Mischerflügels wird dabei erreicht, daß die unsymmetrische Einleitung der einen Komponente in den Ringraum der Öffnung keinen Einfluß auf die Homogenität der gemischten Paste hat.

Die Weiterbildung der Erfindung aus Anspruch 9 ergibt eine aus einer minimalen Anzahl von Einzelteilen aufgebauten und damit für die Handhabung besonders zweckmäßige Gestaltung.

Ansprüche 10 und 11 beziehen sich auf alternative Gestaltungen des die Komponenten-Zuführungen aufweisenden Bauteils, wobei in der Ausführung nach Anspruch 10 das Gerät selbst als die Komponenten enthaltender Zweikammer-Behälter gestaltet ist, während Anspruch 11 ein Tischgerät betrifft, bei dem die Komponenten aus getrennt auswechselbaren Vorratsbehältern zugeführt werden.

Ausführungsbeispiele der Erfindung werden nachstehend anhand der Zeichnungen näher erläutert. Darin zeigt
- Figur 1: einen Längsschnitt durch eine Misch- und Ausbringvorrichtung,
- Figur 2: einen Teil der Vorrichtung nach Figur 1, wobei der Mischer durch einen Verschlußstopfen ersetzt ist, und
- Figur 3 und 4: jeweils einen Teil der Misch- und Ausbringvorrichtung gemäß zwei verschiedenen Varianten.

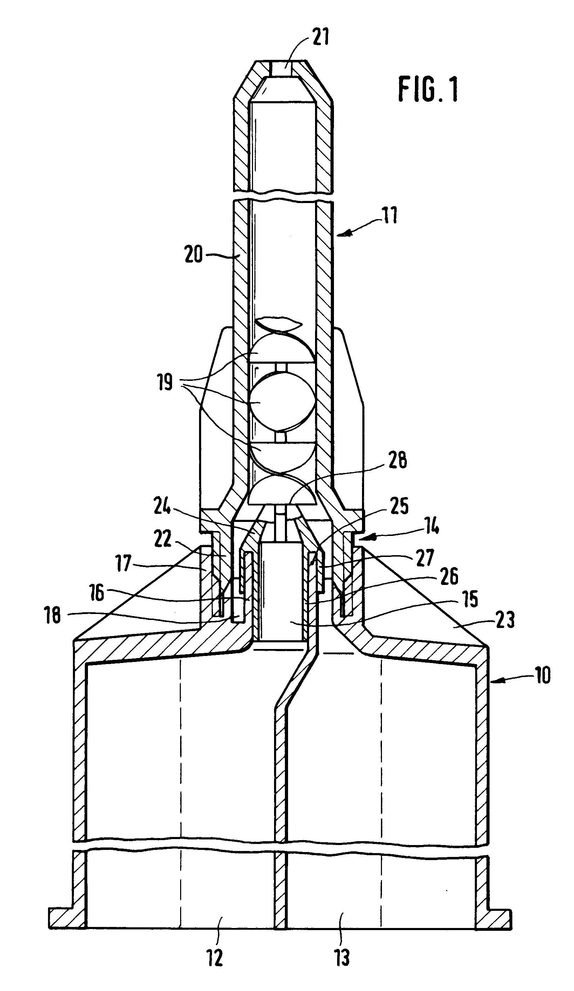

Gemäß Figur 1 besteht die Vorrichtung aus einem Behälter 10 und einem statischen Mischer 11. Der Behälter 10 weist zwei Kammern 12 und 13 mit zylindrischen Innenräumen und zueinander parallelen Achsen auf. Die Kammer 12 mündet im Bereich der Behälteröffnung 14 in einen inneren im Querschnitt kreisförmigen Öffnungsbereich 15, der von einer zylindrischen Trennwand 16 begrenzt ist. Die Kammer 13 mündet in einen zwischen der zylindrischen Trennwand 16 und der dazu konzentrischen äußeren Begrenzungswand 17 der Öffnung 14 gebildeten äußeren Ringbereich 18.

Die Kammern 12 und 13 dienen zur Aufnahme zweier chemisch miteinander reagierender Komponenten der zu erzeugenden pastösen Masse. An ihren in Figur 1 offen dargestellten hinteren Enden sind die Kammern 12 und 13 durch (nicht gezeigte) Kolben verschlossen, die zum Ausbringen der Komponenten durch einen gemeinsamen (ebenfalls nicht gezeigten) Vorschubmechanismus beaufschlagbar sind.

Der Mischer 11 umfaßt eine Reihe von in Axialrichtung hintereinander angeordneten Mischerflügeln 19, die mit kurzen zwischengeschalteten Achsabschnitten einstückig geformt sind. Die Mischerflügel 19 haben etwa die Gestalt eines Schraubengewindes von der Länge jeweils einer halben Ganghöhe und sind mit abwechselnd gegenläufiger Steigung angeordnet. Außerdem steht die Eintrittskante jedes Mischerflügels 19 senkrecht zur Austrittskante des vorhergehenden Flügels.

Die Mischerflügel-Anordnung ist spielfrei in ein rohrförmiges Gehäuse 20 eingesetzt, das mit seinem hinteren (in Figur 1 unteren) offenen Ende an die Öffnung 14 des Behälters 10 anschließbar ist und an seinem vorderen (in Figur 1 oberen) Ende eine Ausbringöffnung 21 für die fertig gemischte pastöse Masse aufweist. Das untere Gehäuseende ist als Hülse 22 gestaltet, deren Innendurchmesser gleich dem Innendurchmesser des behälternahen Teils der Begrenzungswand 17 ist. Die Außenseite der Hülse 22 ist mit einem Gewinde versehen, das in ein im gehäusefernen, erweiterten Teil der Begrenzungswand 17 vorgesehenes Innengewinde einschraubbar ist. Zur Verbesserung der Abdichtung zwischen dem Behälter 10 und dem Mischergehäuse 20 sind die aufeinanderstoßenden Flächen der Begrenzungswand 17 und der Hülse 22 komplementär konisch geformt. An der Außenseite des Gehäuses 20 angeformte Rippen 23 erleichtern die Handhabung des Mischers 11 beim Einschrauben in die Behälteröffnung 14.

Am Eintrittsende der Mischerflügel-Anordnung ist ein insgesamt hülsenartiges, an beiden Enden offenes Trennelement 24 angeordnet, das mit dem ersten Mischerflügel 19 einstückig geformt ist. Das Trennelement 24 ist mit einer nach hinten weisenden Ringnut 25 versehen, in die die zylindrische Trennwand 16 des Behälters 10 eingreift. Die Ringnut 25 wird von einer inneren zylindrischen Begrenzungswand 26 und einer dazu koaxialen äußeren zylindrischen Begrenzungswand 27 definiert und ist so dimensioniert, daß die Begrenzungswände 26 und 27 die Trennwand 16 dicht umschließen.

Die axiale Länge der äußeren Begrenzungswand 27 entspricht etwa der axialen Länge der das Ende des Mischergehäuses 20 bildenden Hülse 22, so daß die Begrenzungswand 27 und die Hülse 22 im wesentlichen in derselben zur Ausbringrichtung senkrechten Ebene enden. Die innere Begrenzungswand 26 des Trennelements 24 reicht dagegen weiter in den Behälter hinein. Das Verhältnis der axialen Länge der äußeren Begrenzungswand 27 zu der der inneren Begrenzungswand 26 ist im wesentlichen umgekehrt proportional zum Verhältnis der Querschnittsfläche des Ringbereichs 18 zu dem des inneren Öffnungsbereichs 15.

Beim Gebrauch der Vorrichtung werden durch gleichzeitiges Vorschieben der beiden (nicht gezeigten) Kolben die beiden in den Kammern 12 und 13 enthaltenen Komponenten in dem durch die Querschnittsflächen der Kammern 12 und 13 vorgegebenen Mengenverhältnis in den Mischer 11 eingebracht und dort durch die Mischerflügel 19 intensiv zu einer homogenen Paste gemischt, die durch die Ausbringöffnung 21 austritt.

Bleibt die Vorrichtung nach Ausbringen einer Teilmenge längere Zeit liegen, so bindet die im Mischer enthaltene Masse ab. Der Mischer wird dadurch unbrauchbar. Soll die Vorrichtung erneut verwendet werden, so wird der Mischer 11 von der Öffnung 14 des Behälters 10 abgeschraubt. Dabei wird gleichzeitig das Trennelement 24 aus der Behälteröffnung 14 herausgedreht. Durch diese Schraubbewegung wird der im äußeren Ringbereich 18 vorhandene Strang der aus der Kammer 13 stammenden Komponente im Bereich des hinteren Endes der Begrenzungswand 27 und der im inneren Öffnungsbereich 15 vorhandene Strang der aus der Kammer 12 stammenden Komponente im Bereich des hinteren Endes der Begrenzungswand abgerissen und abgeschert. Der Mischer 11 wird mitsamt der darin enthaltenen, verhältnismäßig geringfügigen Menge an größtenteils abgebundener Masse und mitsamt dem Trennelement 14 weggeworfen.

Anschließend wird ein neuer, leerer Mischer 11 eingeschraubt. Dabei wird die Trennwand 16 in die Ringnut 25 des Trennelements 24 eingedreht, wobei die Innenfläche der Trennwand 16 durch die innere Begrenzungswand 26 und die Außenfläche der Trennwand 16 durch die äußere Begrenzungswand 27 von etwa anhaftenden Resten der jeweiligen Komponenten befreit werden.

Wird der Einschraubvorgang bis zum Anschlag durchgeführt, der durch die oben beschriebenen komplementären Konusflächen der Begrenzungswand 17 und der Hülse 22 gebildet wird, so befindet sich dann der erste Mischerflügel 19 in einer Stellung, in der seine Eintrittskante 28 in der von den Achsen der beiden Kammern 12 und 13 definierten Ebene (der Zeichenebene der Figur 1) liegt. Diese Stellung ist deshalb wichtig, weil die aus der Kammer 13 zugeführte Komponente den Ringbereich 18 nicht immer gleichmäßig füllen muß, sondern in dem in Figur 1 rechten Teil mit dem größten Druck und in dem in Figur 1 linken Teil des Ringbereichs 18 mit dem kleinsten Druck vorgetrieben wird. Bei der besagten Stellung der Eintrittskante 28 wirkt sich diese Ungleichförmigkeit in der Zuführung der Komponente auf die beiden von dem ersten Mischerflügel 19 gebildeten Teilstränge in gleicher Weise aus, so daß die Homogenität der fertig gemischten Paste praktisch nicht beeinträchtigt wird.

Wegen der oben beschriebenen, auf die Querschnittsverhältnisse der beiden Öffnungsbereiche 15 und 18 bezogenen axialen Längen der Umfangswände 26 und 27 des Trennelements 24 und der an den entsprechenden Stellen abgescherten Komponentenstränge werden beim erneuten Vorschieben der Kolben beide Komponentenstränge gleichzeitig den Mischer 11 erreichen, so daß der nun neugebildete Strang auch in seinem vordersten Bereich das gewünschte Mischungsverhältnis aufweist.

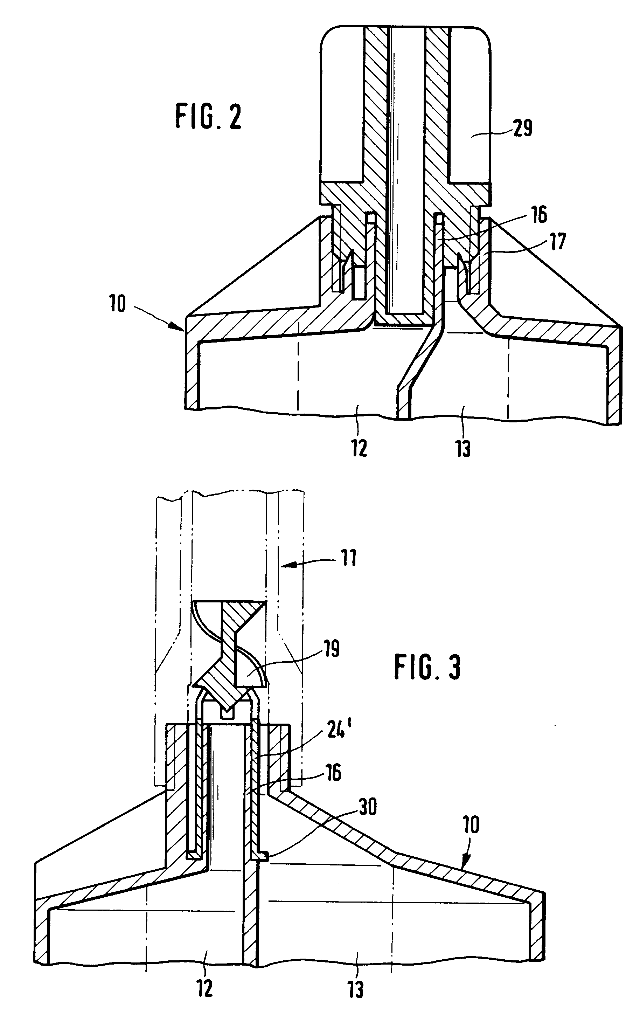

In der obigen Beschreibung ist angenommen worden, daß der benutzte Mischer 11 auf der Vorrichtung belassen und erst kurz vor der erneuten Inbetriebnahme ausgewechselt wird. Stattdessen ist es auch möglich, den Mischer sofort nach Gebrauch zu entfernen und die Behälteröffnung 14 wieder mit dem in Figur 2 gezeigten Verschlußstopfen 29 zu verschließen, mit dem die Vorrichtung ursprünglich vom Befüller geliefert wurde. Der Verschlußstopfen 29 ist in seinen radialen und axialen Abmessungen dem Mischer 11 und dem Trennelement 24 entsprechend gestaltet. Ebenso wie die Hülse 22 des Mischers 11 ist auch er mit einem Außengewinde zum Einschrauben in das Innengewinde der Behälteröffnung 14 versehen. Da er ebenso wie das Trennelement 24 ein gegenseitiges Verschleppen der beiden Komponenten verhindert und ebenso wie der Mischer 11 mit dem Trennelement 24 durch Drehbewegung in die koaxial gestaltete Behälteröffnung 14 eingedreht wird, kann er immer wieder verwendet werden.

Die in Figur 3 gezeigte Variante unterscheidet sich von dem Ausführungsbeispiel nach Figur 1 vor allem in der Gestaltung des Trennelements. Gemäß Figur 3 ist das Trennelement 24' als einfache Hülse ausgebildet, die die zylindrische Trennwand 16 der Behälters 10 an deren Außenfläche umgibt und an ihrem Ende einen nach außen weisenden Ringflansch 30 trägt. Dieser Ringflansch 30 dient dazu, die Abreißstelle des aus der Kammer 13 stammenden Komponentenstrangs zu definieren, während der aus der Kammer 12 stammende Strang etwa am Ende der zylindrischen Trennwand 16 abreißen wird.

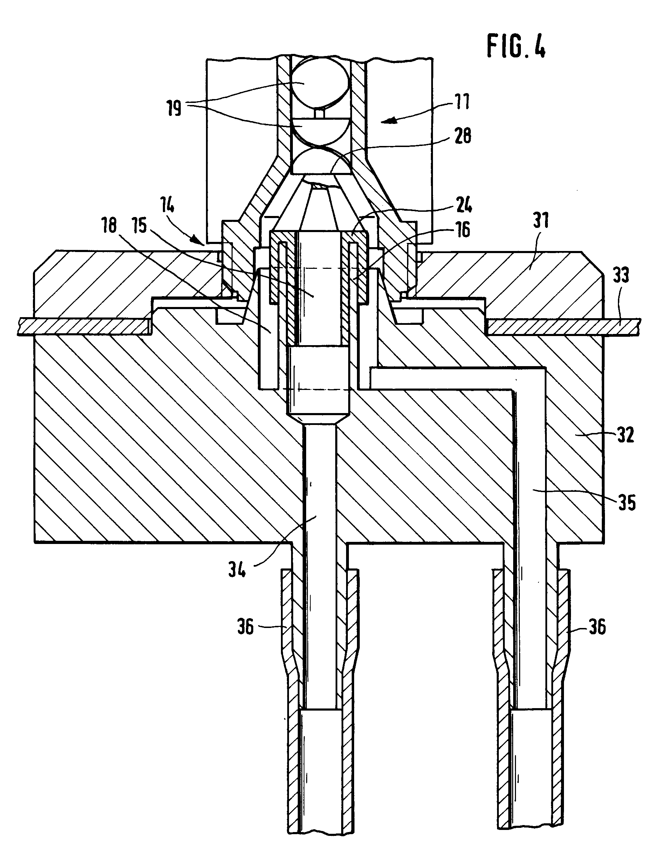

In dem Ausführungsbeispiel nach Figur 4 ist der Mischer 11, der die gleiche Gestaltung haben kann wie in Figur 1 und 3, in eine Öffnung 14 eingeschraubt, die in einem oberen Montageteil 31 vorgesehen ist. Dieses obere Montageteil 31 sowie ein unteres Montageteil 32 sind so gestaltet und lassen sich so zusammensetzen, daß die Vorrichtung in der Öffnung einer Arbeitsplatte 33 montiert werden kann. Das untere Montageteil 32 ist mit Kanälen 34, 35 versehen, wobei der eine Kanal 34 in den inneren Bereich 15 der Öffnung 14 und der andere Kanal 35 in den Ringbereich 18 der Öffnung 14 mündet. Mit 16 ist die in Figur 4 im unteren Montageteil 32 ausgebildete zylindrische Trennwand bezeichnet, die den inneren Bereich 15 vom Ringbereich 18 trennt und auf die das am Mischer 11 vorgesehene Trennelement 24 aufgeschoben wird. Die Kanäle 34 und 35 sind über Rohr- oder Schlauchleitungen 36 mit (nicht gezeigten) Vorratsbehältern verbunden, aus denen die zu vermischenden Komponenten unter Druck zugeführt werden.

In Figur 4 münden die Kanäle 34 und 35 in die betreffenden Bereiche 15, 18 der Öffnung 14 an Stellen, die in der Zeichenebene der Figur 4 liegen. Aus dem in Zusammenhang mit Figur 1 dargelegten Grund ist es daher günstig, wenn auch die Eintrittskante 28 des ersten Mischerflügels 19 in dieser Ebene liegt.

In einer weiteren, nicht weiter dargestellten Ausführungsform kann die den Ringbereich 18 der Öffnung 14 durchsetzende Komponente auch über zwei diametral gegenüberliegende oder auch mehrere über den Umfang verteilte Kanäle zugeführt werden, so daß der Ringbereich 18 noch gleichmäßiger gefüllt wird. In diesem Fall kann die Stellung der Eintrittskante 28 des ersten Mischerflügels 19 beliebig sein.

## Patentansprüche

1. Vorrichtung zum Mischen von miteinander reagierenden Komponenten und Ausbringen der daraus gemischten pastösen Masse, umfassend
ein Bauteil (10; 31, 32) mit getrennten Zuführungen (12, 13; 34, 35) für die Komponenten und einer mit einer zylindrischen Trennwand (16) versehenen kreisförmigen Öffnung (14), wobei der innerhalb der Trennwand (16) gelegene innere Bereich (15) der Öffnung (14) mit der einen Zuführung (12; 34) und der äußere Ringbereich (18) der Öffnung (14) mit der anderen Zuführung (13; 35) in Verbindung steht, und
einen statischen Mischer (11) mit einem rohrförmigen Gehäuse (20), das mit seinem hinteren offenen Ende an die Öffnung (14) des Bauteils (10; 31, 32) anschließbar ist und an seinem vorderen Ende eine Ausbringöffnung (21) aufweist,
gekennzeichnet durch ein mit dem hinteren Ende des Mischers (11) verbundenes hülsenartiges Trennelement (24), das beim Verbinden des Mischers (11) mit dem Bauteil (10; 31, 32) die zylindrische Trennwand (16) fortsetzend, dicht an diese anschließbar ist.

2. Vorrichtung nach Anspruch 1, dadurch gekennzeichnet, daß das Trennelement (24) eine nach hinten weisende Ringnut (25) zur Aufnahme der Trennwand (16) aufweist.

3. Vorrichtung nach Anspruch 1 oder 2, dadurch gekennzeichnet, daß die Öffnung (14) des Bauteils (10; 31, 32) und das hintere Ende des Mischergehäuses (20) mit ineinandergreifenden Innen- und Außengewinden versehen sind.

4. Vorrichtung nach Anspruch 3, dadurch gekennzeichnet, daß das Außengewinde am Mischergehäuse (20) vorgesehen ist.

5. Vorrichtung nach Anspruch 2 und 4, dadurch gekennzeichnet, daß das Ende des das Außengewinde tragenden Gehäuseteils (22) und das Ende der äußeren Begrenzungswand (27) der Ringnut (25) im wesentlichen in derselben Ebene liegen.

6. Vorrichtung nach einem der Ansprüche 2 bis 4, dadurch gekennzeichnet, daß das Verhältnis der Längen der äußeren und der inneren Begrenzungswände (27, 26) der Ringnut (25) im wesentlichen umgekehrt proportional ist zum Verhältnis der Querschnittsflächen des äußeren Ringbereichs (18) und des inneren Bereichs (15) der Öffnung (14).

7. Vorrichtung nach Anspruch 1, dadurch gekennzeichnet, daß das Trennelement (24') die zylindrische Trennwand (16) außen umgreift und an seinem Ende eine nach außen weisenden Ringflansch (30) trägt.

8. Vorrichtung nach einem der Ansprüche 1 bis 7, dadurch gekennzeichnet, daß die Zuführungen (12, 13; 34, 35) im Bauteil (10; 31, 32) nebeneinander mit zur Ausbringrichtung parallelen Achsen angeordnet sind und die Eintrittskante (28) des ersten Mischerflügels (19) in der von diesen Achsen definierten Ebene liegt.

9. Vorrichtung nach einem der Ansprüche 1 bis 8, dadurch gekennzeichnet, daß das Trennelement (24) an den Mischer (11) angeformt ist.

10. Vorrichtung nach einem der Ansprüche 1 bis 9, dadurch gekennzeichnet, daß das Bauteil als Behälter (10) ausgeführt ist, der die zu vermischenden Komponenten in die Zuführungen bildenden, durch Kolben abgedichteten Kammern (12, 13) enthält.

11. Vorrichtung nach einem der Ansprüche 1 bis 9, dadurch gekennzeichnet, daß das Bauteil aus Montageteilen (31, 32) zum Einbau in eine Arbeitsplatte (33) zusammengesetzt ist und die Zuführungen als an getrennte Komponenten-Vorratsbehälter anschließbare Kanäle (34, 35) ausgeführt sind.

## Claims

1. A device for mixing two components which react with each other and for dispensing the pasty mass mixed therefrom, comprising
a structural part (10; 31, 32) having separate feed means (12, 13; 34, 35) for the components, and a circular opening (14) having a cylindrical partitioning wall (16), wherein the space (15) of the opening (14) situated inside the partitioning wall (16) communicates with one feed means (12; 34), and the annular outer space (18) of the opening (14) communicates with the other feed means (13; 35), and
a static mixer (11) including a tubular housing (20) having a rear open end adapted for connection to the opening (14) of the structural part (10; 31, 32), and a dispensing opening (21) at its forward end,
characterised by a sleeve-like separating element (24) joined to the rear end of the mixer (11), which separating element, upon fitting of the mixer (11) onto the structural part (10; 31, 32), is sealingly connected to the cylindrical partitioning wall (16) to constitute an extension thereof.

2. The device of claim 1, characterised in that the separating element (24) has a rearwardly open annular groove (25) for receiving the partitioning wall (16).

3. The device of claim 1 or 2, characterised in that the opening (14) of the structural part (10; 31, 32) and the rear end of the mixer housing (20) are provided with cooperating threads.

4. The device of claim 3, characterised in that the external thread is provided on the mixer housing (20).

5. The device of claims 2 and 4, characterised in that the end of the housing portion (22) having the external thread and the end of the outer confining wall (27) of the annular groove (25) lie substantially in the same plane.

6. The device of any one of claims 2 to 4, characterised in that the ratio of the lengths of the outer and inner confining walls (27, 26) of the annular groove (25) is substantially inversely proportional to the ratio of the cross-sectional areas of the annular outer space (18) and the inner space (15) of the opening (14).

7. The device of claim 1, characterised in that the separating element (24') externally engages the cylindrical partitioning wall (16) and has, at its end, an outwardly facing annular flange (30).

8. The device of any one of claims 1 to 7, characterised in that the feed means (12, 13; 34, 35) are disposed in the structural part (10; 31, 32) in a side-by-side relationship with axes parallel to the dispensing direction, and the leading edge (28) of the first mixer blade (19) lies in the plane defined by these axes.

9. The device of any one of claims 1 to 8, characterised in that the separating element (24) is formed integrally with the mixer (11).

10. The device of any one of claims 1 to 9, characterised in that the structural part is formed as a container (10) which holds the components to be mixed in compartments (31, 32) that constitute the feed means and are sealed by pistons.

11. The device of any one of claims 1 to 9, characterised in that the structural part is composed of mounting parts (31, 32) adapted to be mounted in a working table (33) and that the feed means are formed as channels (34, 35) adapted for connection to separate component reservoirs.

## Revendications

1. Dispositif pour mélanger des composants mutuellement réactifs et pour distribuer le produit pâteux ainsi obtenu, comprenant
un corps (10 ; 31, 32) avec des conduits d'alimentation séparés (12, 13 ; 34, 35) pour les composants et avec une ouverture circulaire (14) pourvue d'une cloison de séparation cylindrique (16), la région intérieure (15) de l'ouverture (14), région située à l'intérieur de la cloison de séparation (16), communiquant avec l'un (12 ; 34) des conduits d'alimentation, et la région annulaire extérieure (18) de l'ouverture (14) communiquant avec l'autre conduit d'alimentation (13 ; 35),
et un mélangeur statique (11) avec un boîtier tubulaire (20), qui peut être raccordé par son extrémité arrière ouverte à l'ouverture (14) du corps (10 ; 31, 32) et qui présente une ouverture de distribution (21) à son extrémité avant,
**caractérisé** par un élément de séparation (24) du genre douille, qui est assemblé à l'extrémité arrière du mélangeur (11) et qui, lors de l'assemblage du mélangeur (11) et du corps (10 ; 31, 32), peut être raccordé de manière étanche à la cloison de séparation cylindrique (16), en la prolongeant.

2. Dispositif selon la revendication 1, **caractérisé** en ce que l'élément de séparation (24) présente une rainure annulaire (25), dirigée vers l'arrière, pour recevoir la cloison de séparation (16).

3. Dispositif selon la revendication 1 ou 2, **caractérisé** en ce que l'ouverture (14) du corps (10 ; 31, 32) et l'extrémité arrière du boîtier de mélangeur (20) sont pourvues de filetages intérieur et extérieur en prise mutuelle.

4. Dispositif selon la revendication 3, **caractérisé** en ce que le filetage extérieur est prévu sur le boîtier de mélangeur (20).

5. Dispositif selon la revendication 2 et 4, **caractérisé** en ce que l'extrémité de la partie de boîtier (22) portant le filetage extérieur et l'extrémité de la paroi de délimitation extérieure (27) de la rainure annulaire (25) se trouvent sensiblement dans le même plan.

6. Dispositif selon l'une des revendications 2 à 4, **caractérisé** en ce que le rapport des longueurs des parois de délimitation extérieure et intérieure (26, 27) de la rainure annulaire (25) est sensiblement inversement proportionnel au rapport des superficies de section de la région annulaire extérieure (18) et de la région intérieure (15) de l'ouverture (14).

7. Dispositif selon la revendication 1, **caractérisé** en ce que l'élément de séparation (24') s'engage extérieurement autour de la cloison de séparation cylindrique (16) et porte, à son extrémité, une collerette annulaire (30) dirigée vers l'extérieur.

8. Dispositif selon l'une des revendications 1 à 7, **caractérisé** en ce que les conduits d'alimentation (12, 13 ; 34, 35) sont disposés côte-à-côte dans le corps (10 ; 31, 32), avec des axes parallèles à la direction de distribution, et le bord d'attaque (28) de la première ailette mélangeuse (19) se trouve dans le plan défini par ces axes.

9. Dispositif selon l'une des revendications 1 à 8, **caractérisé** en ce que l'élément de séparation (24) est formé sur le mélangeur (11).

10. Dispositif selon l'une des revendications 1 à 9, **caractérisé** en ce que le corps est réalisé sous la forme d'un récipient (10) qui contient les composants à mélanger dans des compartiments (12, 13), étanchéifiés par des pistons et constituant les conduits d'alimentation .

11. Dispositif selon l'une des revendications 1 à 9, **caractérisé** en ce que le corps est constitué par assemblage de parties de montage (31, 32) à monter dans une plaque de travail (33), et les conduits d'alimentation sont réalisés sous la forme de canaux (34, 35) pouvant être raccordés à des réservoirs séparés de composants.
